# FASCICULE DE BREVET EUROPEEN

(11) **EP 0 668 128 B1**
(45) Date de publication et mention de la délivrance du brevet: **09.07.1997**
(21) Numéro de dépôt: 94500075.0
(22) Date de dépôt: 26.04.1994
(51) Int. Cl.: B25F 1/02, B23D 21/06

(54) **Dispositif de tenue/liberation d'un outil auxiliaire dans le corps d'un outil manuel**
Halte-/Freigabevorrichtung für ein Zusatzwerkzeug im Gehäuse eines Handwerkzeugs
Holding/releasing device of an auxiliary tool in the body of a hand tool

(30) Priorité: 21.01.1994 ES 9400155 U
(43) Date de publication de la demande: 23.08.1995
(73) Titulaire: SUPER-EGO TOOLS S.A., E-48220 Abadiano (Vizcaya) (ES)
(72) Inventeur: Azkona Ollacarizqueta, Manuel, ES-20280 Hondarribia ( Guipuzcoa ) (ES)
(74) Mandataire: Urizar Barandiaran, Miguel Angel

(56) Documents cités:
- DE-C- 506 625
- DE-C- 821 480
- DE-U- 1 679 682
- DE-U- 7 601 413
- DE-U- 7 811 884
- FR-A- 1 507 273

## Description

La présente invention a trait à un dispositif de tenue/libération d'un outil auxiliaire dans le corps d'un outil manuel.

On a recours habituellement à de petits outils auxiliaires pour la finition, sur les outils manuels.

Il est d'usage, par exemple, d'employer des alésoirs pour l'ébavurage final, auquel on doit recourir après la découpe, sur les coupe-tubes manuels.

Ces petits outils (dont, par exemple, ces mêmes alésoirs) sont indépendants de l'outil manuel principal (par exemple, les coupe-tubes ici mentionnés).

Or il arrive, dans la pratique, que les outils manuels ne se trouvent pratiquement jamais à portée de la main ou disponibles quand on en a justement besoin.

On à proposé, dans le document FR-A-1 507 273, un dispositif de tenue / libération d'un outil auxiliaire dans le corps d'un outil manuel, comportant un orifice ménagé dans le corps de l'outil manuel, orifice dans lequel se loge l'outil auxiliaire.

La présente invention intéresse un dispositif de tenue / libération d'un outil auxiliaire dans le corps d'un outil manuel, permettant à l'outil manuel auxiliaire de se fixer sur le corps de l'outil manuel principal, en pouvant s'en libérer au gré de l'utilisateur, de manière simple et rapide.

A cet effet, le dispositif de tenue / libération d'un outil auxiliaire dans le corps de un outil manuel se caractérise, selon l'invention, pour comporter:
a) un orifice / mortaise ménagé dans le corps de l'outil manuel, orifice dans lequel se loge l'outil auxiliaire;
b) des moyens de retenue de ce même auxiliaire dans ledit orifice / mortaise, et
c) des moyens d'expulsion de ce même outil auxiliaire, les moyens de retenue ci-avant mentionnés cessant d'agir.

On observera en particulier, selon un exemple -non limitatif- de réalisation pratique, que la retenue de l'outil auxiliaire dans l'orifice / mortaise s'effectue grâce à une détente, logée dans une seconde mortaise, articulée au corps de l'outil manuel et pourvue d'une onglette d'enclenchement qui tend à rester encliquetée par l'action d'un ressort à pression, pour se libérer lorsque l'on fait tirer la détente en annulant ainsi la pression du ressort.

Soulignons en particulier, selon un exemple -non limitatif- de réalisation pratique, que l'expulsion de l'outil auxiliaire se trouve facilitée par un ressort expulseur, lequel, logé dans ledit orifice / mortaise, va buter axialement contre sa base.

On trouvera sur les plans, pour mieux permettre de saisir l'objet de la présente invention, une forme choisie de réalisation pratique, susceptible de changements accessoires qui n'en altèrent guère le principe.

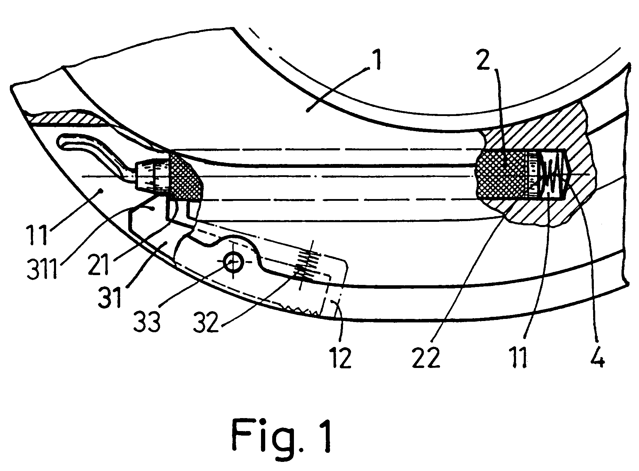

La figure 1 présente une vue générale d'un dispositif de tenue / libération d'un outil auxiliaire dans le corps d'un outil manuel, selon l'invention, dans un exemple -non limitatif- de réalisation pratique.

Dans un exemple -non limitatif- de réalisation pratique, l'outil manuel (1) est un coupe-tubes et l'outil auxiliaire (2), un alésoir. On n'écarte guère l'inclusion de ce dispositif dans d'autres outils manuels (1) et avec d'autres outils auxiliaires (2).

Le dispositif de tenue / libération d'un outil auxiliaire dans le corps d'un outil manuel, selon la réalisation représentée, comprend:
- une mortaise (11) ménagée dans le corps de l'outil manuel (1), dans l'orifice ou mortaise (11) duquel se loge l'outil auxiliaire (2);
- une mortaise auxiliaire (12), également ménagée dans le corps de l'outil manuel (1) dans la mortaise (12) duquel sont montés les moyens (3) employés en vue de la retenue de l'outil auxiliaire (2).

Le dispositif, selon l'invention, se trouve complété par des moyens (4) facilitant l'expulsion de l'outil auxiliaire (2), préalablement libéré des moyens qui le retiennent (3).

Dans un exemple -non limitatif- de réalisation pratique, les moyens (3) comprennent une détente (31) et un ressort (32), logés dans une mortaise (12). La détente (31) comporte une onglette (311) et se trouve articulée en (33) au corps (1) en ayant la possibilité de pivoter, bien qu'elle tende à demeurer dans une position -dans laquelle l'onglette (311) garde encliqueté et retient en (21) l'outil auxiliaire (2)- par l'action du ressort.

Dans un exemple -non limitatif- de réalisation pratique, l'expulsion de l'outil auxiliaire (2) est permise par l'action d'un ressort (4), qui, logé dans l'orifice / mortaise (11) bute axialement contre sa base (22), laquelle, à son tour, est arrondie pour mieux permettre cette poussée axiale.

## Revendications

1. Dispositif de tenue/libération d'un outil auxiliaire (2) dans le corps d'un outil manuel (1), comportant :
a) un orifice/mortaise (11) ménagé dans le corps de l'outil manuel (1), orifice dans lequel se loge l'outil auxiliaire (2); caractérisé par le fait qu'il comporte en outre :
b) une détente, logée dans une seconde mortaise (12), articulée au corps de l'outil manuel et pourvue d'une onglette d'encliquetage (311) de rétention de l'outil auxiliaire, laquelle tend à rester enclenchée par l'action d'un ressort à pression (32), pour se libérer, sous la pression de l'utilisateur, lorsque celui-ci fait tirer la détente (31) en annulant la pression du ressort (32);
c) un ressort expulseur (4), lequel, logé dans ledit orifice/mortaise (11), va buter axialement contre la base (22) de l'outil auxiliaire (2).

## Claims

1. A device for securing/releasing an auxiliary tool (2) inside the body of a manual tool (1), comprising
a) a hole/recess (11) inside the body of the manual tool (1) housing the auxiliary tool (2), characterized in that the device is also made up by
b) a pawl (31), housed inside a second recess (12), articulated to the body of the manual tool and fitted with a locking finger (311) to retain the auxiliary tool (2), which tends to remain locked due to the operation of a pressure spring (32) and is released when the user exerts pressure and the trigger (31) turns, thus overcoming the pressure of the spring (32);
c) an ejector spring (4) which, housed in the said hole/recess (11), abuts axially against the base (22) of the auxiliary tool (2).

## Patentansprüche

1. Befestigungs-/Lösevorrichtung eines Hilfswerkzeugs (2) im Gehäuse eines Handwerkzeugs (1), mit
a) einer im Handwerkzeug (1) vorhandenenen Bohrung/Aufnahmeöffnung (11), in der das Hilfswerkzeug (2) gelagert ist, dadurch gekennzeichnet, daß es außerdem besteht aus
b) einer in einer zweiten Aufnahmebohrung (12) gelagerten Klinke (31), die an das Gehäuse des Handwerkzeugs angewinkelt ist und mit einer Haltegreiferklaue (311) für das Hilfswerkzeug (2) versehen ist, das durch eine Druckfeder (32) gehalten und dadurch gelöst wird, daß durch Druck des Bedieners die Greiferklaue (31) gedreht und der Druck der Feder (32) überwunden wird,
c) einer in der genannten Aufnahmebohrung (11) gelagerten Ausstoßfeder (4), die axial gegen die Basis (22) des Hilfswerkzeugs (2) stößt.
